# EUROPEAN PATENT SPECIFICATION

(11) **EP 4 046 882 B1**
(45) Date of publication and mention of the grant of the patent: **29.11.2023**
(21) Application number: 20948893.1
(22) Date of filing: 22.12.2020
(51) Int. Cl.: B60W 10/08, B60W 10/06, B60W 20/15, B60K 6/485, B60K 6/48

(54) **METHOD FOR CONTROLLING SWITCHING OF MOTOR TORQUE OUTPUT PATH OF HYBRID AUTOMOBILE**
VERFAHREN ZUR STEUERUNG DES SCHALTDREHMOMENTES EINES HYBRIDFAHRZEUGS
PROCÉDÉ POUR COMMANDER LA COMMUTATION D'UN CHEMIN DE SORTIE DE COUPLE MOTEUR D'UNE AUTOMOBILE HYBRIDE

(43) Date of publication of application: 24.08.2022
(73) Proprietor: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd., Ningbo, Zhejiang 315800 (CN)
(72) Inventor: JING, Junchao, Ningbo City, Zhejiang Province 315336 (CN); Liu, Yiqiang, Ningbo City, Zhejiang Province 315336 (CN); HUANG, Weishan, Ningbo City, Zhejiang Province 315336 (CN); ZUO, Botao, Ningbo City, Zhejiang Province 315336 (CN); YANG, Jun, Ningbo City, Zhejiang Province 315336 (CN); WANG, Ruiping, Ningbo City, Zhejiang Province 315336 (CN)
(74) Representative: Tansini, Elio Fabrizio
(86) International application number: PCT/CN2020/138403
(87) International publication number: WO 2022/133746

(56) References cited:
- CN-A- 107 628 023
- CN-A- 108 327 514
- CN-A- 110 103 946
- DE-A1-102007 050 656
- DE-A1-102010 044 618

## Description

### Technical field

The present invention relates to the field of vehicle control, in particular to a control method for switching a torque output path of a motor of a hybrid electric vehicle.

### Background

With increasingly strict requirements of national regulations on fuel consumption and emission, and development of electrification systems, hybrid power technology is a key to achieve energy saving and emission reduction. In order to adapt to national policies and meet emission regulations, both original equipment manufacturers (OEMs) and parts suppliers are looking for solutions. However, existing battery technologies of full electric vehicle technology system is complex and costly, and structure of a hybrid power system determines types of operating modes that can be achieved, therefore, in order to achieve multiple operating modes, the hybrid power system usually has a relatively complex structure. This complex structure leads to that the hybrid power system occupies a relatively large space, which significantly reduces the space utilization inside the vehicle.

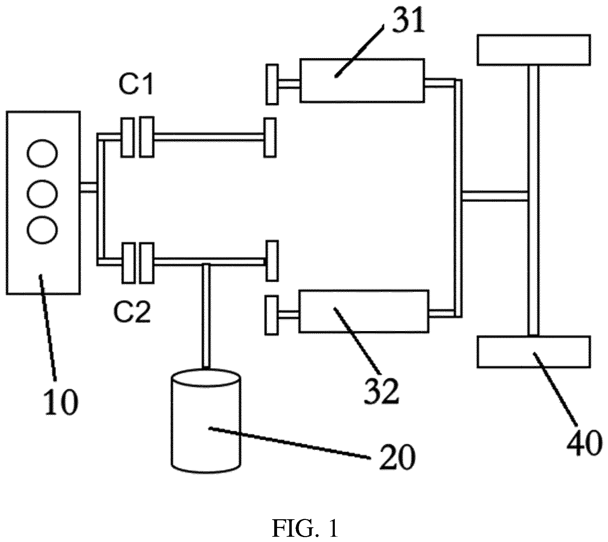

A P2.5-architecture single-motor hybrid power system among the hybrid power systems is shown in FIG. 1, in which 10 represents an engine, 20 represents a motor, C1 represents a first clutch, C2 represents a second clutch, 31 represents an odd-numbered shaft of transmission (which may be connected to the first, third, fifth and seventh gears), 32 represents an even-numbered shaft of transmission (which may be connected to the reverse, second, fourth and sixth gears), and 40 represents a wheel end.

There are 3 torque output paths in a motor of P2.5-architecture hybrid power system, namely Integrated Starter and Generator (ISG) path, Electric Front Axle Drive (EFAD) path and Disengaged path. The ISG path refers to that the motor 20 is connected with the engine 10 through the second clutch C2, while the motor 20 is disconnected with the even-numbered shaft 32of the transmission. The EFAD path refers to that the motor 20 is directly connected with the even-numbered shaft 32 of the transmission for assisting or charging, and the motor 20 is disconnected with the engine 10. The Disengaged path refers to that the motor is disconnected with the engine and the even-numbered shaft of transmission.

Most of the existing single-motor hybrid electric vehicles have only one kind of torque output path for motor, without considering the motor's switching between different torque output paths. Two kinds of torque output paths are defined in the single motor hybrid power system of the present invention, namely the ISG path and the EFAD path. For the sake of system efficiency, when the vehicle speed exceeds a threshold, switching of the motor torque output path necessarily needs to be performed. When the vehicle speed is lower than the threshold, transition of the torque output path of the motor necessarily needs to be performed as well.

The document CN107628023 A, Wang Hong et al, discloses a control method for a hybrid-electric-vehicle transmission system that enables a vehicle to be controlled to enter a pure electric mode, a hybrid series driving mode, a hybrid parallel driving mode, an pure engine driving mode, a vehicle driving charging mode, a sliding/brakingenergy recovery mode or a parking charging mode .

The document CN108327514 A, Zhao Han et al, discloses a multi-mode hybrid power transmission device including a single-line planetary wheel mechanism, a double-clutch speed change mechanism, a differential, an engine and a motor, which enables multiple working modes and coordination between the torque of the engine and the motor. Therefore, it is necessary to provide a solution to solve the technical problem that switching between the ISG path and the EFAD path cannot be performed in the prior art.

### Summary

In order to solve the technical problem that switching between the ISG path and the EFAD path cannot be performed in the prior art, the present invention provides a control method for switching the torque output path of a motor of a hybrid electric vehicle, which is specifically achieved by the following technical solution in the present invention.

The present invention provides a control method for switching a torque output path of a motor of a hybrid electric vehicle, which includes:
acquiring an initial path state of the torque output path of the motor;
acquiring an initial vehicle speed of the vehicle;
acquiring a brake pedal opening;
acquiring an initial accelerator pedal opening;
acquiring an initial state of charge of a vehicle battery;
if the initial path state is an ISG path, the initial state of charge is less than a first preset value, the initial vehicle speed is less than a second preset value and the initial accelerator pedal opening is greater than the third preset value, controlling the torque output path of the motor to be transitioned from the ISG path to an EFAD path; and
if the initial path state is the EFAD path, the initial state of charge is less than the first preset value, the brake pedal opening is greater than a fourth preset value and the initial vehicle speed is greater than a fifth preset value, controlling the torque output path of the motor to be transitioned from the EFAD path to the ISG path, wherein the vehicle comprises an engine, the motor, a first clutch, a second clutch, and a transmission; and the ISG path refers to that the motor is connected with the engine through the second clutch, while the motor is disconnected with the transmission; the EFAD path refers to that the motor is directly connected with the transmission for assisting or charging, and the motor is disconnected with the engine.

A further improvement of the control method for switching a torque output path of a motor of hybrid electric vehicle provided by the present invention is that controlling the torque output path of the motor to be transitioned from the ISG path to the EFAD path includes:
acquiring an initial state of charge/discharge of the motor;
if the initial state of charge/discharge is that the motor is charged by an engine in the ISG path, controlling motor torque to be transitioned from negative torque to positive torque, transitioning the state of charge/discharge of the motor to that the motor outputs positive torque to a crankshaft end of the engine in the ISG path, and acquiring first current torque of the engine;
if the initial state of charge/discharge is that the motor outputs positive torque to the crankshaft end of the engine in the ISG path, acquiring the first current torque of the engine;
if the first current torque of the engine meets a first preset condition, transitioning the state of charge/discharge of the motor to that the motor is charged by the engine in the ISG path;
acquiring a first current vehicle speed of the vehicle; and
if the first current vehicle speed is equal to the second preset value, transitioning the state of charge/discharge of the motor to that the motor outputs positive torque to a wheel end in the EFAD path.

A further improvement of the control method for switching a torque output path of a motor of a hybrid electric vehicle provided by the present invention is that controlling the motor torque to be transitioned from negative torque to positive torque, and transitioning the state of charge/discharge of the motor to that the motor outputs positive torque to the crankshaft end of the engine in the ISG path includes:
acquiring first current torque of the motor;
determining a first slope parameter according to the first current torque of the motor and a first preset duration; and
controlling the motor torque to be transitioned from negative torque to positive torque according to the first slope parameter, and transitioning the state of charge/discharge of the motor to that the motor outputs positive torque to the crankshaft end of the engine in the ISG path.

A further improvement of the control method for switching a torque output path of a motor of a hybrid electric vehicle provided by the present invention is that the method further includes: acquiring a first current state of charge of the vehicle battery, determining charging torque according to the first current state of charge, and determining initial torque requested by a driver according to the initial accelerator pedal opening;
wherein the first preset condition is that the first current torque of the engine is not less than a difference between the initial torque requested by the driver and the charging torque.

A further improvement of the control method for switching the torque output path of a motor of a hybrid electric vehicle provided by the present invention is that transitioning the state of charge/discharge of the motor to that the motor outputs positive torque to the wheel end in the EFAD path includes:
reducing the motor torque to 0N·m, and adjusting an ignition angle to increase actual torque of the engine, so that the actual torque of the engine is not less than torque requested by the driver on the wheel end;
controlling the motor to transition from a torque mode to a rotation speed mode;
adjusting a motor rev to a target motor rev in the EFAD path, so that the state of charge/discharge of the motor is transitioned to that the motor outputs positive torque to the wheel end in the EFAD path.

A further improvement of the control method for switching a torque output path of a motor of a hybrid electric vehicle provided by the present invention is that before adjusting the motor rev to the target motor rev in the EFAD path, the method further includes:
acquiring a current wheel speed;
acquiring a main reduction ratio;
acquiring a transmission ratio of transmission gears;
determining the target motor rev in the EFAD path, wherein the target motor rev in the EFAD path is equal to a product of the current wheel speed, the main reduction ratio and the transmission ratio of the transmission gears.

A further improvement of the control method for switching a torque output path of a motor of a hybrid electric vehicle provided by the present invention is that after transitioning the state of charge/discharge of the motor to that the motor outputs positive torque to the wheel end in the EFAD path, the method further includes:
acquiring a current accelerator pedal opening;
determining torque currently requested by the driver according to the current accelerator pedal opening;
acquiring second current torque of the engine; and
if the second current torque of the engine is less than the torque currently requested by the driver, transitioning the state of charge/discharge of the motor to that the motor outputs positive torque to the crankshaft end of the engine in the EFAD path.

A further improvement of the control method for switching a torque output path of a motor of a hybrid electric vehicle provided by the present invention is that transitioning the state of charge/discharge of the motor to that the motor outputs positive torque to the crankshaft end of the engine in the EFAD path includes:
acquiring second current torque of the motor;
acquiring maximum torque of the engine;
determining an engine load according to the torque currently requested by the driver and the maximum torque of the engine e;
determining a second preset duration according to a preset calibration relationship and the engine load;
determining a second slope parameter according to the second current torque of the motor and the second preset duration; and
controlling the motor according to the second slope parameter, and transitioning the state of charge/discharge of the motor to that the motor outputs positive torque to the crankshaft end of the engine in the EFAD path.

A further improvement of the control method for switching a torque output path of a motor of a hybrid electric vehicle provided by the present invention is that controlling the torque output path of the motor to be transitioned from the EFAD path to the ISG path includes:
acquiring a second current vehicle speed of the vehicle;
if the second current vehicle speed is equal to a sixth preset value or a seventh preset value, controlling the motor to shift to a second gear, and adjusting a motor rev to a target rev of the second gear, wherein the sixth preset value is greater than the seventh preset value;
acquiring a second current state of charge of the vehicle battery;
if the second current state of charge is not less than the first preset value, adjusting the motor rev to a target motor rev in the ISG path, so that the motor rev is equal to an engine rev, and transitioning the state of charge/discharge of the motor to that the motor outputs negative torque to the engine in the ISG path to assist the engine to stop.

A further improvement of the control method for switching a torque output path of a motor of a hybrid electric vehicle provided by the present invention is that said controlling the motor to shift to the second gear and adjusting the motor rev to the second gear target motor rev includes:
acquiring a current gear of the motor;
if the current gear of the motor is a sixth gear, following steps are sequentially performed: controlling the engine to shift to a fifth gear, controlling the motor to shift to a fourth gear, controlling the engine to shift to a third gear, controlling the motor to shift to the second gear, and adjusting the motor rev to a preset rev of the second gear; and
if the current gear of the motor is the fourth gear, the following steps are sequentially performed: controlling the engine to shift to a third gear, controlling the motor to shift to the second gear, and adjusting the motor rev to the preset rev of the second gear.

A further improvement of the control method for switching the torque output path of a motor of a hybrid electric vehicle provided by the present invention is that the method further includes:
if the second current state of charge is less than the first preset value, acquiring a third current vehicle speed; and
if the third current vehicle speed is less than an eighth preset value, transitioning the state of charge/discharge of the motor to that the motor is charged by the engine in the ISG path.

A further improvement of the control method for switching a torque output path of a motor of a hybrid electric vehicle provided by the present invention is that transitioning the state of charge/discharge of the motor to that the motor is charged by the engine in the ISG path, the method further includes:
acquiring a third current state of charge; and
if the third current state of charge is not less than the first preset value, transitioning the state of charge/discharge of the motor to that the motor outputs negative torque to the engine in the ISG path, to assist the engine to stop.

The present invention solve the technical problem that the switching between the ISG path and the EFAD path cannot be performed in the prior art, and provides a control method for a case that the torque output path of the motor of the hybrid electric vehicle changes, including the control method of transitioning from the ISG path to the EFAD path and from the EFAD path to the ISG path. The control method for switching the torque output path of the motor of the hybrid electric vehicle according to the present invention improves the drivability, comfort and safety of the vehicle by a smooth control during a process of switching the torque output path of the motor.

### Brief Description of Drawings

In order to illustrate technical solutions of the embodiments of the present invention or in the prior art more clearly, the following is a brief description of accompanying drawings required in the description of the embodiments or the prior art. It is apparent that the drawings in the following description are only some embodiments of the present invention, and for those of ordinary skills in the art, other drawings can be obtained on the basis of these drawings without using any inventive effort.
FIG. 1 is a schematic structural diagram of a P2.5-architecture single-motor hybrid power system in a hybrid power system.
FIG. 2 is a flow chart of a control method for switching a torque output path of a motor of a hybrid electric vehicle according to an embodiment of the present invention.
FIG. 3 is a schematic diagram of state transitioning from an ISG path to an EFAD path according to an embodiment of the present invention.
FIG. 4 is a schematic diagram of state transitioning from the EFAD path to the ISG path according to an embodiment of the present invention.
FIG. 5 is a flow chart of transitioning from the ISG path to the EFAD path according to an embodiment of the present invention.
FIG. 6 is a state schematic diagram of an ISG path-motor charging stage according to an embodiment of the present invention.
FIG. 7 is a state schematic diagram of an ISG path-motor assisting stage according to an embodiment of the present invention.
FIG. 8 is a state schematic diagram of an ISG path-motor charging stage following an ISG path-motor assisting stage according to an embodiment of the present invention.
FIG. 9 is a state schematic diagram of a motor rev synchronization stage according to an embodiment of the present invention.
FIG. 10 is a state schematic diagram of an EFAD path-motor assisting stage according to an embodiment of the present invention;
FIG. 11 is a flow chart of transitioning from the EFAD path to the ISG path according to an embodiment of the present invention;
FIG. 12 is a state schematic diagram of an EFAD path-motor charging stage according to an embodiment of the present invention;
FIG. 13 is a state schematic diagram of a stage of gear shifting and shifting down of a motor according to an embodiment of the present invention;
FIG. 14 is a state schematic diagram of a stage of a motor rev synchronization i.e., adjusting from a motor rev of the EFAD path to a motor rev of the ISG path according to an embodiment of the present invention;
FIG. 15 is a state schematic diagram of a stage in which a motor assists engine stop in the ISG path according to an embodiment of the present invention.

### Detailed Description

The technical solutions in the embodiments of the present invention will be clearly and completely described with reference to the drawings in the embodiments of the present invention. It is apparent that the described embodiments are only part of the embodiments of the present invention, rather than all of the embodiments of the present invention. Based on the embodiments in the present invention, all other embodiments obtained by those of ordinary skills in the art without using inventive efforts are within the scope of protection of the present invention.

In order to solve the technical problem that switching between the ISG path and the EFAD path cannot be performed in the prior art, the present invention provides a control method for switching a torque output path of a motor of a hybrid electric vehicle, which is specifically achieved by the following technical solution in the present invention.

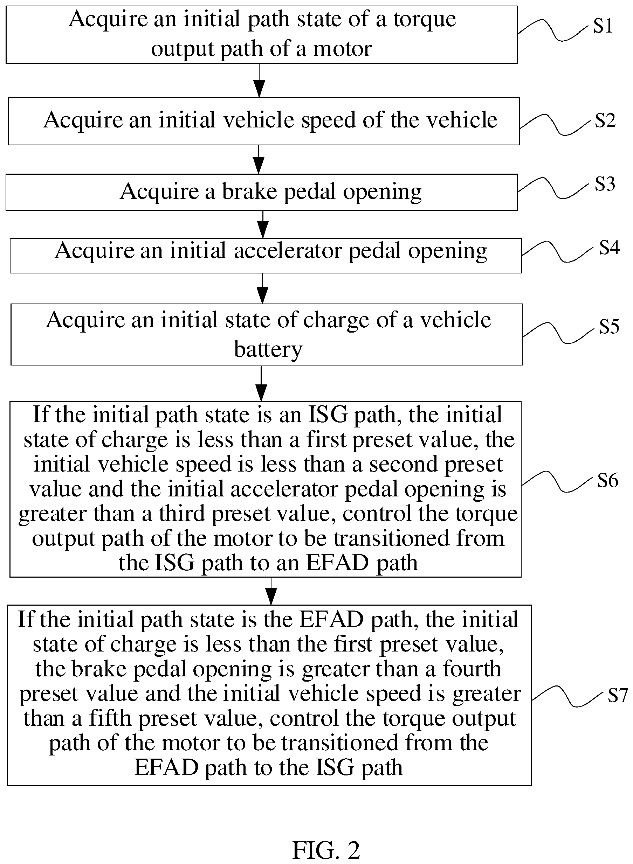

Referring to FIG. 2, this embodiment provides a control method for switching a torque output path of a motor of a hybrid electric vehicle, which includes steps of:
S 1: acquiring an initial path state of a torque output path of a motor;
S2: acquiring an initial vehicle speed of the vehicle;
S3: acquiring a brake pedal opening;
S4: acquiring an initial accelerator pedal opening;
S5: acquiring an initial state of charge of a vehicle battery;
S6: if the initial path state is an ISG path, the initial state of charge is less than a first preset value, the initial vehicle speed is less than a second preset value and the initial accelerator pedal opening is greater than a third preset value, controlling the torque output path of the motor to be transitioned from the ISG path to an EFAD path;
S7: if the initial path state is the EFAD path, the initial state of charge is less than the first preset value, the brake pedal opening is greater than a fourth preset value and the initial vehicle speed is greater than a fifth preset value, controlling the torque output path of the motor to be transitioned from the EFAD path to the ISG path.

This embodiment is applied to a P2.5-architecture single-motor hybrid power system in a hybrid power system, in which the motor is connected with an input shaft end of an even-numbered shaft of transmission, and there are two conditions when the torque output path of the motor changes. The P2.5-architecture single-motor hybrid power system in the hybrid power system is shown in FIG. 1, in which 10 represents an engine, 20 represents a motor, C1 represents a first clutch, C2 represents a second clutch, 31 represents an odd-numbered shaft of the transmission (which may be connected with the first, third, fifth and seventh gears), 32 represents the even-numbered shaft of the transmission (which may be connected with the reverse, second, fourth and sixth gears), and 40 represents a wheel end.

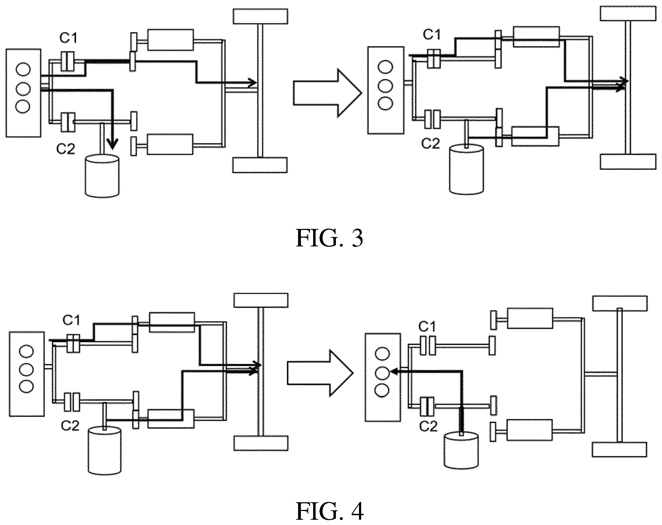

As shown in FIG. 3, a first case is switching to the EFAD path from the ISG path. First, the vehicle is in a charging condition in the ISG path, the driver is now stepping deeper on the accelerator to accelerate, and at this time, the ISG path will be transitioned to the EFAD path.

As shown in FIG. 4, a second case is switching to the ISG path from the EFAD path. When the driver sets the vehicle in the fourth gear, the vehicle speed is about 50km/h, decelerating now, and a SOC (State of Charge) of the vehicle is insufficient, so the engine keeps running, at this time, the motor is in the EFAD path, and the driver stepped on the brake pedal to stop the vehicle. Due to recycling of braking energy during the braking process, the SOC is gradually full charged, and the engine needs to be stopped, so it is necessary to transition to the ISG path for the motor-assisting stop, and at this time, transition from the EFAD path to the ISG path is performed.

This embodiment defines a control method for a case that the torque output path of the motor of a hybrid electric vehicle changes, including the control method of transitioning from the ISG path to the EFAD path and from the EFAD path to the ISG path.

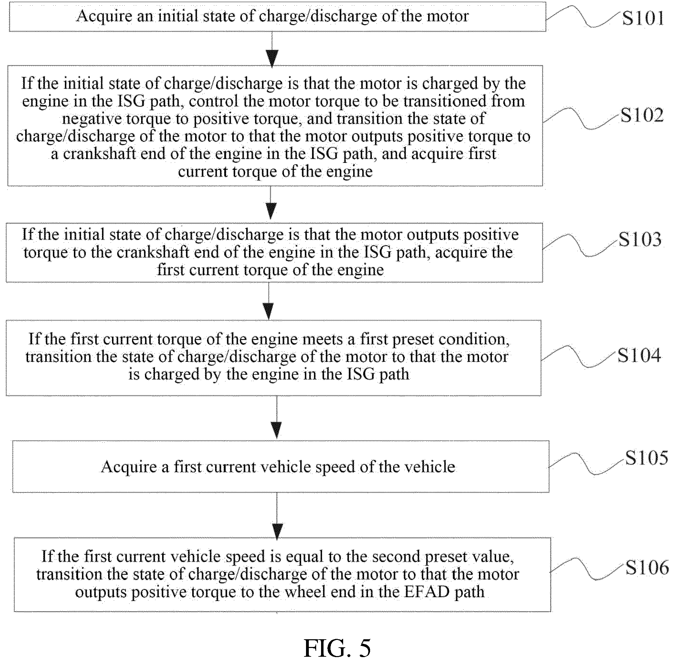

Furthermore, as shown in FIG. 5, controlling the torque output path of the motor to be transitioned from the ISG path to the EFAD path includes steps of:
S101: acquiring an initial state of charge/discharge of the motor;
S102: if the initial state of charge/discharge is that, in the ISG path, the motor is charged by the engine, controlling the motor torque to be transitioned from negative torque to positive torque, and transitioning the state of charge/discharge of the motor to that the motor outputs positive torque to a crankshaft end of the engine in the ISG path, and acquiring first current torque of the engine; and
S103: if the initial state of charge/discharge is that the motor outputs positive torque to the crankshaft end of the engine in the ISG path, acquiring the first current torque of the engine.

In this embodiment, in the case that the vehicle is in a charging condition in the ISG path, if at this time the driver is now stepping deeper on the accelerator to accelerate, it is necessary to transition from the ISG route to the EFAD route. In a case that the driver steps on the accelerator to accelerate during charging in the ISG mode, when a certain vehicle speed threshold is reached, the motor will be requested to switch from the ISG charging mode to the EFAD mode for assisting or using the EFAD path for charging to improve system efficiency. The transition process includes an ISG path-motor charging stage, an ISG path-motor assisting stage, an ISG path-motor charging stage, a motor rev synchronization stage and an EFAD path-motor assisting stage.

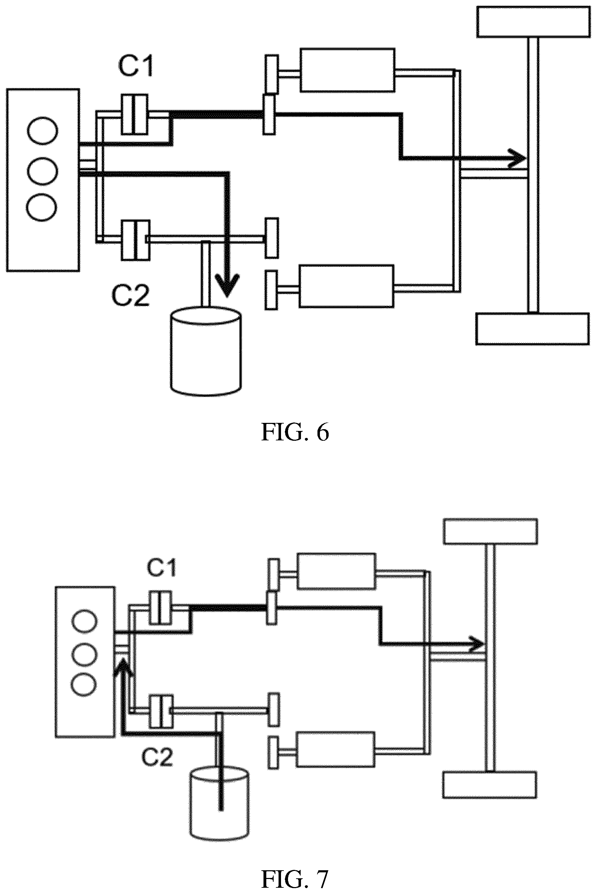

As shown in FIG. 6, in the initial stage of "ISG path-motor charging", the initial charge state of the vehicle is less than the first preset value, the battery SOC is low, and an energy management module sends a charging request, at this time, the state of charge/discharge is that the engine is charging the motor in the ISG path. For example, an initial condition is that the vehicle speed in-situ is 0, the gear is at D, the accelerator pedal is at 0%, the battery SOC is low, the energy management module sends a charging request, and the motor is charged through the ISG path.

As shown in FIG. 7, in the stage of "ISG path-motor charging", the driver stepped deeper on the accelerator, and the initial accelerator pedal opening is greater than the third preset value, since the engine responds less quickly than the motor, the driver's requirements on the torque can hardly be met by the engine torque alone, and the motor will provide assistance in the ISG path. While the initial state of charge/discharge is that, in the ISG path, the motor is charged by the engine, therefore, it is necessary to control the motor torque to be transitioned from negative torque to positive torque, and the state of charge/discharge of the motor is transitioned to that, in the ISG path, the motor discharges to the engine, that is, in the ISG path, the motor outputs positive torque to the crankshaft end of the engine (as in step S102).

Further, step S102 includes:
acquiring the first current torque of the motor;
determining a first slope parameter according to the first current torque of the motor and a first preset duration;
controlling the motor torque to be transitioned from negative torque to positive torque according to the first slope parameter, and is transitioning the state of charge/discharge of the motor to that the motor outputs positive torque to the crankshaft end of the engine in the ISG path; and
acquiring the first current torque of the engine.

The torque of the motor will rapidly increase from the first current torque of the motor (for example, -50nm) to 0, and the motor will exit the charging state of, wherein a duration of a process of exiting charging (the first preset duration) is calibrated and generally set to 1 to 1.5 seconds.

In order to ensure a linearity of low-speed acceleration, accelerator characteristics at low speed is configured to have little correlation with the vehicle speed, which tends to lead to that the trigger fast torque regulation of the engine torque, resulting in that the actual engine torque follows a gas-path requested torque. However, for a Miller cycle engine, lag of the gas-path torque is obvious, in this case, if the fast torque adjustment function of the engine cannot be triggered, it will cause the engine torque to increase slowly. Regarding this problem, a strategy is upgraded to ensure that ignition angle adjustment of the engine is forcibly activated when charging torque is unloaded.

After the ISG charging torque becomes 0, it continues to change to positive torque. Here, the torque slope parameter of the motor (the first slope parameter) is the key to control stability of the motor torque. The first slope parameter = the first current torque of the motor/the first preset duration.

Furthermore, it is not necessary to go through the stage of "ISG path-motor charging", and the initial state of charge/discharge may be that the motor outputs positive torque to the crankshaft end of the engine in the ISG path, and then the first current torque of the engine can be directly acquired (as in step S103).

Furthermore, the control method for switching a torque output path of a motor of a hybrid electric vehicle provided by this embodiment further includes step S104: if the first current torque of the engine meets a first preset condition, the state of charge/discharge of the motor is transitioned to that the motor is charged by the engine in the ISG path. Furthermore, after step S102 or step S 103 and before step S104, the control method for switching a torque output path of a motor of a hybrid electric vehicle provided by this embodiment further includes: acquiring a first current state of charge of the vehicle battery, determining charging torque according to the first current state of charge, and determining initial torque requested by the driver according to the initial accelerator pedal opening; the first preset condition is that the first current torque of the engine is not less than a difference between the initial torque requested by the driver and the charging torque. This is a stage of "ISG path-motor charging" following the stage of "ISG path-motor assisting".

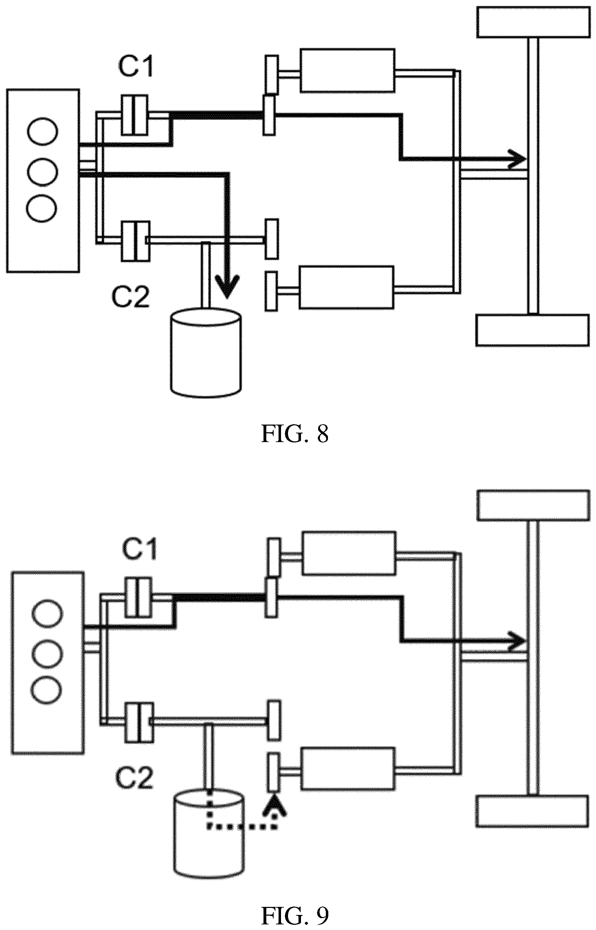

As shown in FIG. 8, in the stage of "ISG path-motor charging" following the stage of "ISG path-motor assisting" , after the actual engine torque response ascends, the engine torque is large enough to meet the driver's requests on torque and battery charging, that is, the first current torque of the engine meets the first preset condition. In this case, the motor may be charged in the ISG path, that is, the state of charge/discharge of the motor is transitioned to that the motor is charged by the engine in the ISG path.

Furthermore, this embodiment provides a control method for switching a torque output path of a motor of a hybrid electric vehicle, which further includes steps of:
S105: acquiring a first current vehicle speed of the vehicle;
S106: if the first current vehicle speed is equal to the second preset value, transitioning the state of charge/discharge of the motor to that the motor outputs positive torque to the wheel end in the EFAD path.

Furthermore, transitioning the state of charge/discharge of the motor to that the motor outputs positive torque to the wheel end in the EFAD path includes:
reducing the motor torque to 0N·m, and an ignition angle is adjusted to increase the actual torque of the engine, so that the actual torque of the engine is not less than the torque requested by the driver on the wheel end;
controlling the motor to transition from a torque mode to a rev mode;
adjusting a motor rev to a target motor rev in the EFAD path, so that the state of charge/discharge of the motor is transitioned to that the motor outputs the positive torque to the wheel end in the EFAD path.

In Embodiment 1, the torque requested by the driver on the wheel end is obtained according to a current actual brake pedal opening, a current actual accelerator pedal opening and a preset calibration relationship.

Furthermore, before adjusting the motor rev to the target motor rev of the EFAD path, the method further includes:
acquiring a current wheel speed;
acquiring a main reduction ratio;
acquiring a transmission ratio of transmission gears;
determining the target motor rev in the EFAD path, wherein the target motor rev in the EFAD path is equal to the product of the current wheel speed, the main reduction ratio and the transmission ratio of the transmission gears.

As shown in FIG. 9, in the stage of "motor rev synchronization", with the increase of vehicle speed, the path of the motor needs to be transitioned from the ISG path to the EFAD path according to the system efficiency. The motor rev needs to be synchronized from an actual speed in the ISG path to the target rev in the EFAD path, so synchronization of the motor rev is triggered.

Before the synchronization, the motor is operating in the ISG path, and the motor rev is equal to an engine rev.

Before the synchronization is started, the motor torque needs to be reduced to 0N·m. At the same time, the engine torque needs to be adjusted quickly to ensure that the torque requested by the wheel end can be met. Therefore, during the time when the motor torque decreases, the engine torque should be quickly responded by adjusting the ignition angle.

When the motor torque drops to 0, the motor mode changes from the torque mode to the rev mode, and in this case the vehicle is driven only by the engine.

When the motor rev is equal to the target motor rev in the EFAD path, the synchronization stage is completed. The target motor rev in the EFAD path is equal to the product of current wheel speed and the transmission ratio of the transmission gears.

Furthermore, after the state of charge/discharge of the motor is transitioned to that the motor outputs the positive torque to the wheel end in the EFAD path, the method further includes:
acquiring a current accelerator pedal opening;
determining torque currently requested by the driver according to the current accelerator pedal opening;
acquiring second current torque of the engine; and
if the second current torque of the engine is less than the torque currently requested by the driver, transitioning the state of charge/discharge of the motor to that the motor outputs positive torque to the crankshaft end of the engine in the EFAD path.

Furthermore, transitioning the state of charge/discharge of the motor to that the motor outputs the positive torque to the crankshaft end of the engine in the EFAD path includes:
acquiring the second current torque of the motor;
acquiring maximum torque of the engine;
determining an engine load according to the torque currently requested by the driver and the maximum torque of the engine;
determining a second preset duration according to a preset calibration relationship and the engine load;
determining a second slope parameter according to the second current torque of the motor and the second preset duration;
controlling the motor according to the second slope parameter, and transitioning the state of charge/discharge of the motor to that the motor outputs positive torque to the crankshaft end of the engine in the EFAD path.

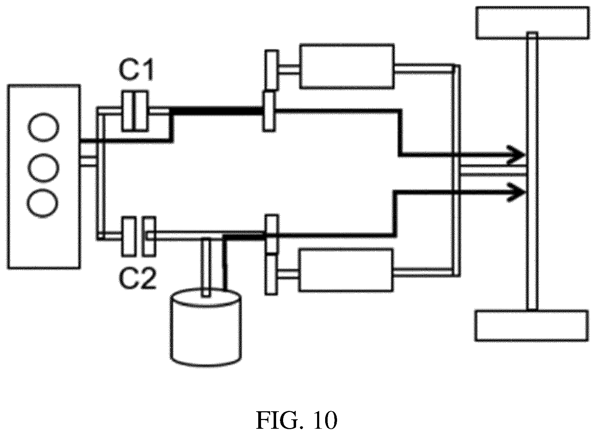

As shown in FIG. 10, in the stage of "EFAD path-motor assisting", the path of the motor is already switched to the EFAD path, and both the motor and engine can directly drive the wheels of the vehicle. The motor propels the vehicle through the even-numbered shaft, and the motor may be connected with the second, fourth or sixth gear. The engine can drive the vehicle through the odd-numbered shaft or the even-numbered shaft. The engine may be connected with the first, second, third, fourth, fifth, sixth or seventh gear. At the same time, gear transmission ratios of the engine and the motor are independent from each other, or may be different. When the vehicle speed is increased to a shifting point of 1st -second gear, the speed ratio of the engine decreases, and since the torque at the crankshaft end of the engine remains stable, the torque at the wheel end of the engine decreases. In order to keep the torque at the wheel end stable, the motor will assist in the compensation of the torque at the wheel end driven by the engine, which decreased due to the reduction of the speed ratio.

At high throttle, if the engine cannot meet the driver's request on torque, the motor will also assist to meet the driver's request on the torque. After entering the EFAD path, a change rate of the motor torque is determined by the engine load, and there is a compromise between smoothness of the switching and rapidity of the intervention by the motor assistance: wherein smoothness is the main concern for small and medium loads, and power is more considerable at high throttle. The following table shows a setting of rates that are relatively linear.

| | | | | | |
|---|---|---|---|---|---|
| Engine load | 0 | 0.2 | 0.4 | 0.6 | 0.7 |
| Second preset duration | 3 | 3 | 3 | 2 | 1 |

The above table shows a preset calibration relationship between the engine load and the second preset duration. According to the preset calibration relationship and the engine load, the second preset duration can be determined, and according to the second current torque of the motor and the second preset duration, the second slope parameter can be determined. The second slope parameter may be equal to the second current torque of the motor/the second preset duration.

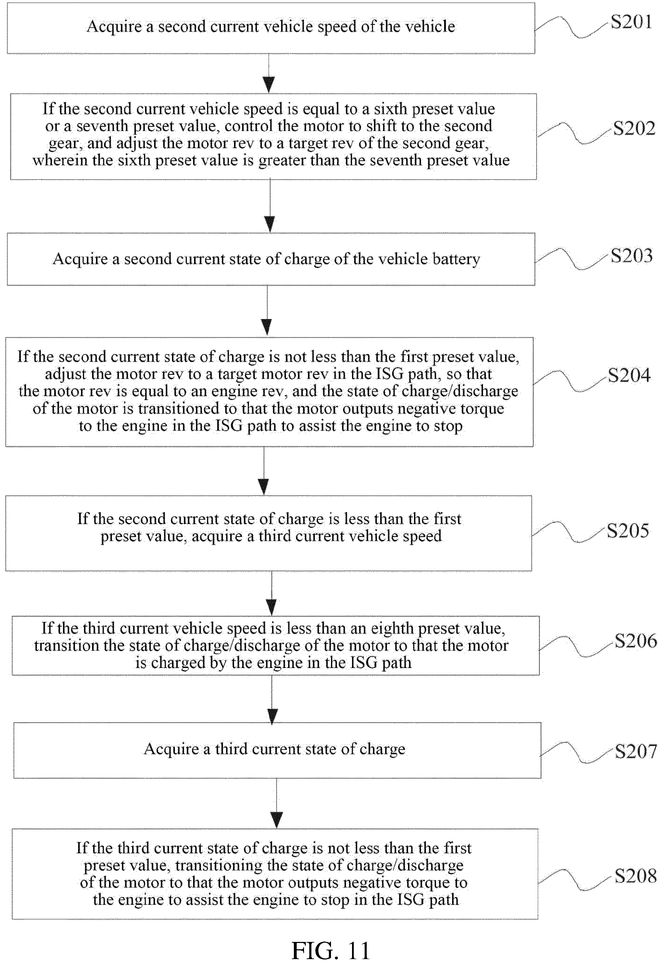

As shown in FIG. 11, furthermore, controlling the torque output path of the motor to be transitioned from the EFAD path to the ISG path includes steps of:
S201: acquiring a second current vehicle speed of the vehicle;
S202: if the second current vehicle speed is equal to a sixth preset value or a seventh preset value, controlling the motor to shift to the second gear, and adjusting the motor rev to a target rev of the second gear, wherein the sixth preset value is greater than the seventh preset value.

Furthermore, controlling the motor to shift to the second gear and adjusting the motor rev to the target rev of the second gear includes:
acquiring a current gear of the motor;
if the current gear of the motor is the sixth gear, the following steps are sequentially performed: controlling the engine to shift to the fifth gear, controlling the motor to shift to the fourth gear, controlling the engine to shift to the third gear, controlling the motor to shift to the second gear, and adjusting the motor rev to a preset rev of the second gear;
if the current gear of the motor is the fourth gear, the following steps are sequentially performed: controlling the engine to shift to the third gear, controlling the motor to shift to the second gear, and adjusting the motor rev to the preset rev of the second gear.

When the driver sets to the fourth gear, decelerates at about 50km/h, and the SOC is insufficient, so the engine keeps running, at this time, the motor is in the EFAD path, and the driver steps on the brake pedal to stop the vehicle, due to the recycling of braking energy during the braking process, the SOC is gradually full charged, and the engine needs to be stopped, so it is necessary to transition to the ISG path for the motor-assisting stop, at this time, the transition from the EFAD path to the ISG path will be performed. The transition process from the EFAD path to the ISG path includes the stages of EFAD path-motor charging, motor gear shifting and down shifting, motor rev synchronization-adjusting from the rev in the EFAD path to the rev in the ISG path, and motor assisted engine stop in the ISG path.

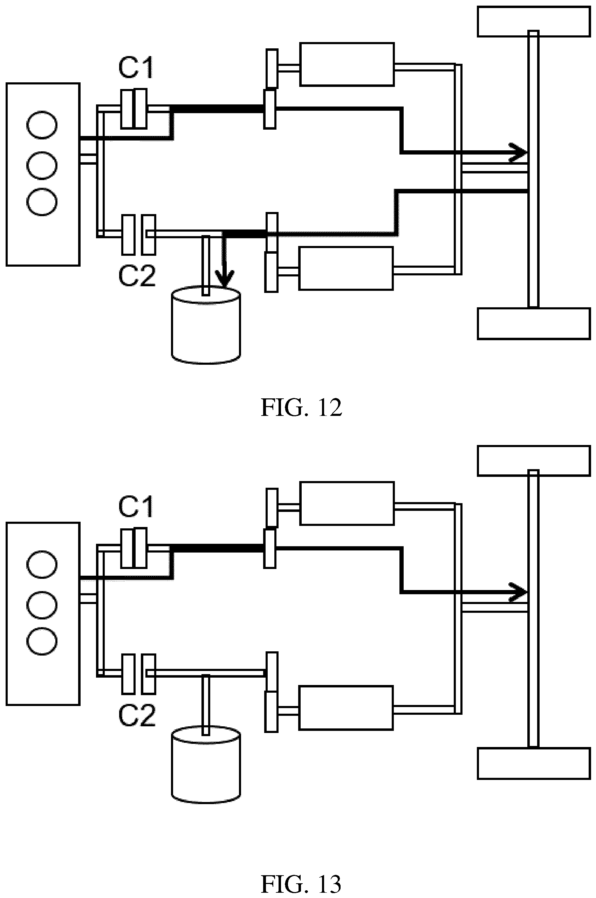

As shown in FIG. 12, in the stage of "EFAD path-motor charging", an initial state is that the vehicle is at 50km/h, the SOC of battery is low, the motor gear is at the fourth gear, the engine is running, and the driver steps on the brake pedal. During deceleration, because of the low SOC, the hybrid power system has a braking recovery capability, wherein torque of the braking recovery is equal to a total braking torque from a braking system. In this stage, the motor is charged in the EFAD path.

As shown in FIG. 13, in the stage of "motor gear shifting and down shifting", if the current gear of the motor is the fourth gear, when the vehicle speed decelerates to a gear shifting point of fourth-to-second (the seventh preset value), the motor's shift request will be triggered, but if the motor directly off the fourth gear down to second gear, there will be power interruption, so the third gear should be used as an intermediate gear. Therefore, after the completion of gear shifting of fourth-to-third, then adjust of fourth-to-second of motor speed is performed to adjust the motor rev to the target motor rev of sent second gear sent by a VCU (Vehicle Control Unit). If the current gear of the motor is the sixth gear, when the vehicle speed decelerates to the sixth preset value, the shift request of motor is triggered.

During deceleration, the battery is always being charged, when the battery is fully charged during the shifting of the motor, the engine needs to be stopped. If the engine stops during the shifting of the motor, and the driver steps on the accelerator to accelerate at this time, because the motor cannot compensate the torque loss caused by the clutch dragging the engine during the shifting, it will result in a feeling of great impact and power loss. Therefore, in order to avoid power interruption, during the shifting process of the motor, the engine's stop request will be delayed, and an engine stop request will only be sent after shifting process of the motor is completed.

Furthermore, the control method for switching a torque output path of a motor of a hybrid electric vehicle further includes steps of:
S203: acquiring a second current state of charge of the vehicle battery; and
S204: if the second current state of charge is not less than the first preset value, adjusting the motor rev to a target motor rev in the ISG path, so that the motor rev is equal to the engine rev, and the state of charge/discharge of the motor is transitioned to that the motor outputs negative torque to the engine in the ISG path to assist the engine to stop.

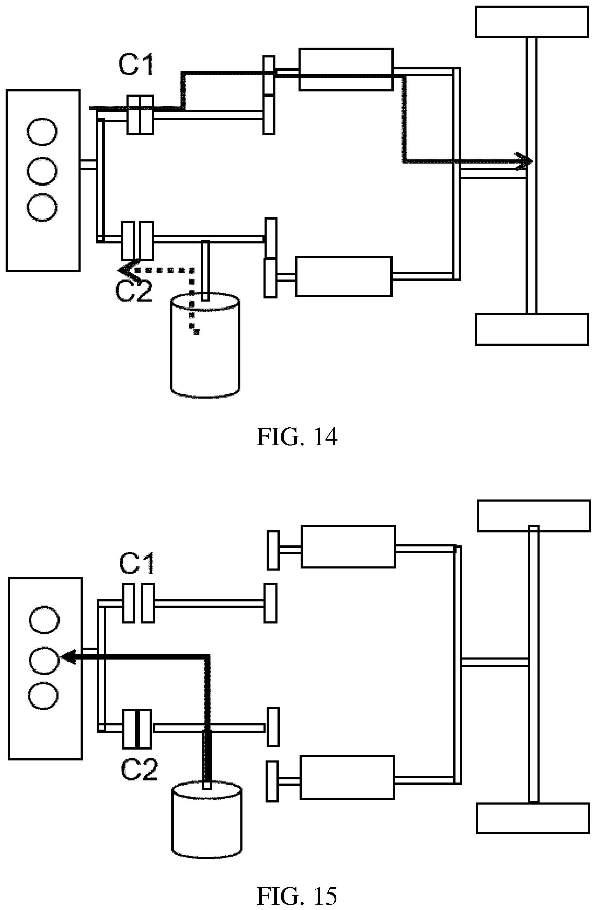

As shown in FIG. 14, in the stage of "motor rev synchronization-adjusting from the rev in the EFAD path to the rev in the ISG path", the motor has finished shifting, and the second current state of charge is not less than the first preset value, so the engine can be shut down, For the sake of NVH (Noise Vibration and Harshness) performances, and in order to reduce the noise and vibration of the engine stop, the engine stop needs to be assisted by a motor. The path of the motor needs to be switched from the EFAD path to the ISG path to synchronize the motor rev to the engine rev.

As shown in FIG. 15, in the stage of "motor assisted engine stop in the ISG path", after the synchronization of motor rev is completed, the path of the motor is changed to the ISG path, and the engine is about to stop. The motor is controlled to output negative torque to assist the engine to stop, so as to reduce the vibration. The negative torque of the motor is calculated according to a rev difference between an actual engine rev and a target engine rev.

Furthermore, the control method for switching a torque output path of a motor of a hybrid electric vehicle further includes steps of:
S205: if the second current state of charge is less than the first preset value, acquiring a third current vehicle speed; and
S206: if the third current vehicle speed is less than an eighth preset value, transitioning the state of charge/discharge of the motor to that the motor is charged by the engine in the ISG path.

Further, after step S206, the method further includes steps of:
S207: acquiring a third current state of charge; and
S208: if the third current state of charge is not less than the first preset value, transitioning the state of charge/discharge of the motor to that the motor outputs negative torque to the engine to assist the engine to stop in the ISG path.

In this working condition, the second current state of charge is less than the first preset value, the SOC is still relatively low, and the battery is still being charged. After the motor completes the shifting, the vehicle speed is lower than a certain threshold (such as 5km/h), in this case, the SOC is still relatively low, and it needs to be charged, for the sake of charging efficiency of the system, the motor needs to be switched from the EFAD path to the ISG path for charging. Therefore, the motor needs a speed regulation. After the synchronization of the motor rev is completed, the path of the motor is changed to the ISG path, and the motor is charged in the ISG path. After the charging is completed, the state of charge/discharge of the motor is transitioned to that the motor outputs negative torque to the engine, to assist the engine to stop in the ISG path.

For a hybrid electric vehicle with P2.5 structure, the power system thereof consists of an engine, a motor, a 7DCT transmission, a decelerator, half shafts and wheels. In a case that the motor is in an ISG path, the motor is connected with an even-numbered shaft clutch, and the gear of the motor is at gear 0. In a case that the motor is in an EFAD path, the motor is connected with the wheel end, and there are three gears of second-fourth-sixth, when conditions on vehicle speed and accelerator are met, the motor will shift gears. The main functions of the ISG path are low-speed charging, stop assistance and low-speed assistance. In a case that the vehicle speed is greater than 13km/h, the vehicle will exit the ISG path and enter the EFAD path. If the engine is not stopped when the vehicle speed is less than 5km/h, the vehicle will enter the ISG path. Therefore, in the process of low SOC acceleration, the path of the motor will be switched from the ISG path to the EFAD path. In some working conditions during low SOC deceleration, the path of the motor will be switched from the EFAD path to the ISG path.

The present invention solve the technical problem that switching between the ISG path and the EFAD path cannot be performed in the prior art, and provides a control method for a case that the torque output path of the motor of the hybrid electric vehicle changes, including the control method of transitioning from the ISG path to the EFAD path and from the EFAD path to the ISG path. The control method for switching a torque output path of a motor of a hybrid electric vehicle according to the present invention improves the drivability, comfort and safety of the vehicle by a smooth control during a process of switching the torque output path of the motor.

## Claims

1. A control method for switching a torque output path of a motor (20) of a hybrid electric vehicle, comprising:
acquiring an initial path state of the torque output path of the motor (20);
acquiring an initial vehicle speed of the vehicle;
acquiring a brake pedal opening;
acquiring an initial accelerator pedal opening;
acquiring an initial state of charge of a vehicle battery;
**characterized in that**
if the initial path state is an integrated starter and generator, ISG, path, the initial state of charge is less than a first preset value, the initial vehicle speed is less than a second preset value and the initial accelerator pedal opening is greater than the third preset value, controlling the torque output path of the motor (20) to be transitioned from the ISG path to an electric front axle drive, EFAD, path; and
if the initial path state is the EFAD path, the initial state of charge is less than the first preset value, the brake pedal opening is greater than a fourth preset value and the initial vehicle speed is greater than a fifth preset value, controlling the torque output path of the motor (20) to be transitioned from the EFAD path to the ISG path;
wherein the vehicle comprises an engine (10), the motor (20), a first clutch (C1), a second clutch (C2), and a transmission; and
the ISG path refers to that the motor (20) is connected with the engine (10) through the second clutch (C2), while the motor (20) is disconnected with the transmission; the EFAD path refers to that the motor (20) is directly connected with the transmission for assisting or charging, and the motor (20) is disconnected with the engine (10).

2. The control method for switching a torque output path of a motor (20) of a hybrid electric vehicle according to claim 1, wherein controlling the torque output path of the motor (20) to be transitioned from the ISG path to the EFAD path comprises:
acquiring an initial state of charge/discharge of the motor (20);
if the initial state of charge/discharge is that the motor (20) is charged by an engine (10) in the ISG path, controlling motor torque to be transitioned from negative torque to positive torque, transitioning the state of charge/discharge of the motor (20) to that the motor (20) outputs positive torque to a crankshaft end of the engine (10) in the ISG path, and acquiring first current torque of the engine (10);
if the initial state of charge/discharge is that the motor (20) outputs positive torque to the crankshaft end of the engine (10) in the ISG path, acquiring the first current torque of the engine (10);
if the first current torque of the engine (10) meets a first preset condition, transitioning the state of charge/discharge of the motor (20) to that the motor (20) is charged by the engine (10) in the ISG path;
acquiring a first current vehicle speed of the vehicle; and
if the first current vehicle speed is equal to the second preset value, transitioning the state of charge/discharge of the motor (20) to that the motor (20) outputs positive torque to a wheel end (40) in the EFAD path.

3. The control method for switching a torque output path of a motor (20) of a hybrid electric vehicle according to claim 2, wherein controlling the motor torque to be transitioned from negative torque to positive torque, and transitioning the state of charge/discharge of the motor (20) to that the motor (20) outputs positive torque to the crankshaft end of the engine (10) in the ISG path, comprises:
acquiring first current torque of the motor (20);
determining a first slope parameter according to the first current torque of the motor (20) and a first preset duration; and
controlling the motor torque to be transitioned from negative torque to positive torque according to the first slope parameter, and transitioning the state of charge/discharge of the motor (20) to that the motor (20) outputs positive torque to the crankshaft end of the engine (10) in the ISG path.

4. The control method for switching a torque output path of a motor (20) of a hybrid electric vehicle according to claim 2, further comprising: acquiring a first current state of charge of the vehicle battery, determining charging torque according to the first current state of charge, and determining initial torque requested by a driver according to the initial accelerator pedal opening;
wherein the first preset condition is that the first current torque of the engine (10) is not less than a difference between the initial torque requested by the driver and the charging torque.

5. The control method for switching a torque output path of a motor (20) of a hybrid electric vehicle according to claim 2, wherein transitioning the state of charge/discharge of the motor (20) to that the motor (20) outputs positive torque to the wheel end (40) in the EFAD path comprises:
reducing the motor torque to 0N.m, and adjusting an ignition angle to increase actual torque of the engine (10), so that the actual torque of the engine (10) is not less than torque requested by a driver on the wheel end (40);
controlling the motor (20) to transition from a torque mode to a rotation speed mode;
adjusting a motor rev to a target motor rev in the EFAD path, so that the state of charge/discharge of the motor (20) is transitioned to that the motor (20) outputs positive torque to the wheel end (40) in the EFAD path.

6. The control method for switching a torque output path of a motor (20) of a hybrid electric vehicle according to claim 5, wherein before adjusting the motor rev to the target motor rev in the EFAD path, the method further comprises:
acquiring a current wheel speed;
acquiring a main reduction ratio;
acquiring a transmission ratio of transmission gears;
determining the target motor rev in the EFAD path, wherein the target motor rev in the EFAD path is equal to a product of the current wheel speed, the main reduction ratio and the transmission ratio of the transmission gears.

7. The control method for switching a torque output path of a motor (20) of a hybrid electric vehicle according to claim 2, wherein after transitioning the state of charge/discharge of the motor (20) to that the motor (20) outputs positive torque to the wheel end (40) in the EFAD path, the method further comprises:
acquiring a current accelerator pedal opening;
determining torque currently requested by a driver according to the current accelerator pedal opening;
acquiring second current torque of the engine (10); and
if the second current torque of the engine (10) is less than the torque currently requested by the driver, transitioning the state of charge/discharge of the motor (20) to that the motor (20) outputs positive torque to the crankshaft end of the engine (10) in the EFAD path.

8. The control method for switching a torque output path of a motor (20) of a hybrid electric vehicle according to claim 7, wherein transitioning the state of charge/discharge of the motor (20) to that the motor (20) outputs positive torque to the crankshaft end of the engine (10) in the EFAD path comprises:
acquiring second current torque of the motor (20);
acquiring maximum torque of the engine (10);
determining an engine (10) load according to the torque currently requested by the driver and the maximum torque of the engine (10);
determining a second preset duration according to a preset calibration relationship and the engine load;
determining a second slope parameter according to the second current torque of the motor (20) and the second preset duration; and
controlling the motor (20) according to the second slope parameter, and transitioning the state of charge/discharge of the motor (20) to that the motor (20) outputs positive torque to the crankshaft end of the engine (10) in the EFAD path.

9. The control method for switching a torque output path of a motor (20) of a hybrid electric vehicle according to claim 1, wherein controlling the torque output path of the motor (20) to be transitioned from the EFAD path to the ISG path comprises:
acquiring a second current vehicle speed of the vehicle;
if the second current vehicle speed is equal to a sixth preset value or a seventh preset value, controlling the motor (20) to shift to a second gear, and adjusting a motor rev to a target rev of the second gear, wherein the sixth preset value is greater than the seventh preset value;
acquiring a second current state of charge of the vehicle battery; and
if the second current state of charge is not less than the first preset value, adjusting the motor rev to a target motor rev in the ISG path, so that the motor rev is equal to an engine rev, and transitioning the state of charge/discharge of the motor (20) to that the motor (20) outputs negative torque to the engine (10) in the ISG path to assist the engine (10) to stop.

10. The control method for switching a torque output path of a motor (20) of a hybrid electric vehicle according to claim 9, wherein controlling the motor (20) to shift to the second gear and adjusting the motor rev to the target rev of the second gear comprising:
acquiring a current gear of the motor (20);
if the current gear of the motor (20) is a sixth gear, following steps are sequentially performed: controlling the engine (10) to shift to a fifth gear, controlling the motor (20) to shift to a fourth gear, controlling the engine (10) to shift to a third gear, controlling the motor (20) to shift to the second gear, and adjusting the motor rev to a preset rev of the second gear; and
if the current gear of the motor (20) is the fourth gear, the following steps are sequentially performed: controlling the engine (10) to shift to a third gear, controlling the motor (20) to shift to the second gear, and adjusting the motor rev to the preset rev of the second gear.

11. The control method for switching a torque output path of a motor (20) of a hybrid electric vehicle according to claim 9, further comprising:
if the second current state of charge is less than the first preset value, acquiring a third current vehicle speed; and
if the third current vehicle speed is less than an eighth preset value, transitioning the state of charge/discharge of the motor (20) to that the motor (20) is charged by the engine (10) in the ISG path.

12. The control method for switching a torque output path of a motor (20) of a hybrid electric vehicle according to claim 11, wherein after transitioning the state of charge/discharge of the motor (20) to that the motor (20) is charged by the engine (10) in the ISG path, the method further comprises:
acquiring a third current state of charge; and
if the third current state of charge is not less than the first preset value, transitioning the state of charge/discharge of the motor (20) to that the motor (20) outputs negative torque to the engine (10) in the ISG path, to assist the engine (10) to stop.

## Patentansprüche

1. Steuerungsverfahren zum Umschalten eines Drehmomentpfads eines Motors (20) eines Hybrid-Elektrofahrzeugs, umfassend:
Erfassen eines anfänglichen Pfadzustands des Drehmomentpfads des Motors (20);
Erfassen einer anfänglichen Fahrzeuggeschwindigkeit des Fahrzeugs;
Erfassen einer Bremspedalöffnung;
Erfassen einer anfänglichen Gaspedalöffnung;
Erfassen eines anfänglichen Ladezustands einer Fahrzeugbatterie,
**gekennzeichnet durch**
Steuern des Drehmomentpfads des Motors (20), sodass dieser vom ISG-Pfad auf den Pfad eines elektrischen Vorderachsantriebs, Electric Front Axle Drive, EFAD, übergeht, wenn der anfängliche Pfadzustand ein integrierter Startergenerator, ISG, ist, der anfängliche Ladezustand geringer ist als ein erster voreingestellter Wert, die anfängliche Fahrzeuggeschwindigkeit geringer ist als ein zweiter voreingestellter Wert und die anfängliche Gaspedalöffnung größer ist als der dritte voreingestellte Wert, und
Steuern des Drehmomentpfads des Motors (20), sodass dieser vom EFAD-Pfad auf den ISG-Pfad übergeht, wenn der anfängliche Pfadzustand der EFAD-Pfad ist, der anfängliche Ladezustand geringer ist als der erste voreingestellte Wert, die Bremspedalöffnung größer ist als ein vierter voreingestellter Wert und die anfängliche Fahrzeuggeschwindigkeit größer ist als ein fünfter voreingestellter Wert,
wobei das Fahrzeug ein Antriebssystem (10), den Motor (20), eine erste Kupplung (C1) und eine zweite Kupplung (C2) und ein Getriebe umfasst, und
sich der ISG-Pfad darauf bezieht, dass der Motor (20) mit dem Antriebssystem (10) durch die zweite Kupplung (C2) verbunden ist, während der Motor (20) vom Getriebe getrennt ist, wobei sich der EFAD-Pfad darauf bezieht, dass der Motor (20) direkt mit dem Getriebe verbunden ist, um zu unterstützen oder aufzuladen, und der Motor (20) vom Antriebssystem (10) getrennt ist.

2. Steuerungsverfahren zum Umschalten eines Drehmomentpfads eines Motors (20) eines Hybrid-Elektrofahrzeugs nach Anspruch 1, wobei das Steuern des Drehmomentpfads des Motors (20), sodass dieser vom ISG-Pfad auf den EFAD-Pfad übergeht, Folgendes umfasst:
Erfassen eines anfänglichen Lade-/Entladezustands des Motors (20);
Steuern des Motordrehmoments, sodass dieses von einem negativen Drehmoment auf ein positiven Drehmoment übergeht, indem der Übergang des Lade-/Entladezustands des Motors (20) so erfolgt, dass der Motor (20) ein positives Drehmoment an einem Kurbelwellenende des Antriebssystems (10) im ISG-Pfad erzeugt, wenn der anfängliche Lade-/Entladezustand beinhaltet, dass der Motor (20) von einem Antriebssystem (10) im ISG-Pfad aufgeladen wird, und Erfassen eines ersten Ist-Drehmoments des Antriebssystems (10);
Erfassen des ersten Ist-Drehmoments des Antriebssystems (10), wenn der anfängliche Lade-/Entladezustand beinhaltet, dass der Motor (20) ein positives Drehmoment am Kurbelwellenende des Antriebssystems (10) im ISG-Pfad erzeugt;
Übergehen des Lade-/Entladezustands des Motors (20), sodass der Motor (20) vom Antriebssystem (10) im ISG-Pfad aufgeladen wird, wenn das erste Ist-Drehmoment des Antriebssystems (10) eine erste voreingestellte Bedingung erfüllt;
Erfassen einer ersten Ist-Fahrzeuggeschwindigkeit des Fahrzeugs, und
Übergehen des Lade-/Entladezustands des Motors (20), sodass der Motor (20) ein positives Drehmoment an einem Radende (40) im EFAD-Pfad erzeugt, wenn die erste Ist-Fahrzeuggeschwindigkeit gleich dem zweiten voreingestellten Wert ist.

3. Steuerungsverfahren zum Umschalten eines Drehmomentpfads eines Motors (20) eines Hybrid-Elektrofahrzeugs nach Anspruch 2, wobei das Steuern des Drehmomentpfads, sodass der Übergang vom negativen Drehmoment zum positiven Drehmoment erfolgt, und der Übergang des Lade-/Entladezustands des Motors (20), sodass der Motor (20) ein positives Drehmoment am Kurbelwellenende des Antriebssystems (10) im ISG-Pfad erzeugt, Folgendes umfassen:
Erfassen des ersten Ist-Drehmoments des Motors (20);
Ermitteln eines ersten Steigungsparameters je nach dem ersten Ist-Drehmoment des Motors (20) und einer ersten voreingestellten Dauer und
Steuern des Motordrehmoments, sodass dieses je nach dem ersten Steigungsparameter von einem negativen Drehmoment auf ein positives Drehmoment übergeht, und Übergehen des Lade-/Entladezustands des Motors (20), sodass der Motor (20) ein positives Drehmoment am Kurbelwellenende des Antriebssystems (10) im ISG-Pfad erzeugt.

4. Steuerungsverfahren zum Umschalten eines Drehmomentpfads eines Motors (20) eines Hybrid-Elektrofahrzeugs nach Anspruch 2, zudem Folgendes umfassend: Erfassen eines ersten Ist-Ladezustands der Fahrzeugbatterie, Ermitteln des Ladedrehmoments je nach dem ersten Ist-Ladezustand und Ermitteln des anfänglichen, von einem Fahrer geforderten Drehmoments je nach der anfänglichen Gaspedalöffnung,
wobei die erste voreingestellte Bedingung beinhaltet, dass das erste Ist-Drehmoment des Antriebssystems (10) nicht geringer ist als eine Differenz zwischen dem vom Fahrer geforderten anfänglichen Drehmoment und dem Ladedrehmoment.

5. Steuerungsverfahren zum Umschalten eines Drehmomentpfads eines Motors (20) eines Hybrid-Elektrofahrzeugs nach Anspruch 2, wobei der Übergang des Lade-/Entladezustands des Motors (20), sodass der Motor (20) ein positives Drehmoment am Radende (40) im EFAD-Pfad erzeugt, Folgendes umfasst:
Reduzieren des Motordrehmoments auf 0 Nm und Regeln eines Zündungswinkels, um das tatsächliche Drehmoment des Antriebssystems (10) zu erhöhen, sodass das tatsächliche Drehmoment des Antriebssystems (10) nicht geringer ist als das vom Fahrer auf dem Radende (40) geforderte Drehmoment;
Steuern des Motors (20), um von einem Drehmomentmodus auf einen Drehzahlmodus überzugehen;
Regeln einer Motordrehzahl auf eine Sollmotordrehzahl im EFAD-Pfad, sodass der Übergang des Lade-/Entladezustands des Motors (20) erfolgt, sodass der Motor (20) ein positives Drehmoment am Radende (40) im EFAD-Pfad erzeugt.

6. Steuerungsverfahren zum Umschalten eines Drehmomentpfads eines Motors (20) eines Hybrid-Elektrofahrzeugs nach Anspruch 5, wobei das Verfahren vor dem Regeln der Motordrehzahl auf die Sollmotordrehzahl im EFAD-Pfad Folgendes umfasst:
Erfassen einer Ist-Raddrehzahl;
Erfassen eines Hauptuntersetzungsverhältnisses;
Erfassen eines Übersetzungsverhältnisses von Rädervorgelegen;
Ermitteln der Sollmotordrehzahl im EFAD-Pfad, wobei die Sollmotordrehzahl im EFAD-Pfad gleich dem Produkt der Ist-Raddrehzahl, des Hauptuntersetzungsverhältnisses und des Übersetzungsverhältnisses der Rädervorgelege ist.

7. Steuerungsverfahren zum Umschalten eines Drehmomentpfads eines Motors (20) eines Hybrid-Elektrofahrzeugs nach Anspruch 2, wobei das Verfahren nach dem Übergang des Lade-/Entladezustands des Motors (20), sodass der Motor (20) ein positives Drehmoment am Radende (40) im EFAD-Pfad erzeugt, zudem Folgendes umfasst:
Erfassen einer Ist-Gaspedalöffnung;
Ermitteln des aktuell von einem Fahrer je nach der Ist-Gaspedalöffnung geforderten Drehmoments;
Erfassen eines zweiten Ist-Drehmoments des Antriebssystems (10), und
Übergehen des Lade-/Entladezustands des Motors (20), sodass der Motor (20) ein positives Drehmoment am Kurbelwellenende des Antriebssystems (10) im EFAD-Pfad erzeugt, wenn das zweite Ist-Drehmoment des Antriebssystems (10) geringer als das Drehmoment ist, das der Fahrer aktuell fordert.

8. Steuerungsverfahren zum Umschalten eines Drehmomentpfads eines Motors (20) eines Hybrid-Elektrofahrzeugs nach Anspruch 7, wobei der Übergang des Lade-/Entladezustands des Motors (20), sodass der Motor (20) ein positives Drehmoment am Kurbelwellenende des Antriebssystems (10) im EFAD-Pfad erzeugt, Folgendes umfasst:
Erfassen eines zweiten Ist-Drehmoments des Motors (20);
Erfassen eines maximalen Drehmoments des Antriebssystems (10) ;
Ermitteln einer Last des Antriebssystems (10) je nach dem vom Fahrer geforderten aktuellen Drehmoment und dem maximalen Drehmoment des Antriebssystems (10);
Ermitteln einer zweiten voreingestellten Dauer je nach einer voreingestellten Kalibrierungsbeziehung und der Antriebssystemlast;
Ermitteln eines zweiten Steigungsparameters je nach dem zweiten Ist-Drehmoment des Motors (20) und der zweiten voreingestellten Dauer, und
Steuern des Motors (20) nach dem zweiten Steigungsparameter und Übergehen des Lade-/Entladezustands des Motors (20), sodass der Motor (20) ein positives Drehmoment am Kurbelwellenende des Antriebssystems (10) im EFAD-Pfad erzeugt.

9. Steuerungsverfahren zum Umschalten eines Drehmomentpfads eines Motors (20) eines Hybrid-Elektrofahrzeugs nach Anspruch 1, wobei das Steuern des Drehmomentpfads des Motors (20), sodass der Übergang vom EFAD-Pfad auf den ISG-Pfad erfolgt, Folgendes umfasst:
Erfassen einer zweiten Ist-Fahrzeuggeschwindigkeit des Fahrzeugs;
Steuern des Motors (20) zum Schalten in eine zweite Getriebestufe und Regeln einer Motordrehzahl auf eine Solldrehzahl der zweiten Getriebestufe, wenn die zweite Ist-Fahrzeuggeschwindigkeit gleich einem sechsten voreingestellten Wert oder einem siebten voreingestellten Wert ist, wobei der sechste voreingestellte Wert größer ist als der siebte voreingestellte Wert;
Erfassen eines zweiten Ist-Ladezustands der Fahrzeugbatterie, und
Regeln der Motordrehzahl auf eine Sollmotordrehzahl im ISG-Pfad, sodass die Motordrehzahl gleich einer Antriebssystemdrehzahl ist, wenn der zweite Ist-Ladezustand nicht geringer ist als der erste voreingestellte Wert, und Übergehen des Lade-/Entladezustands des Motors (20), sodass der Motor (20) ein negatives Drehmoment am Antriebssystem (10) im ISG-Pfad erzeugt, um das Antriebssystem (10) beim Stoppen zu unterstützen.

10. Steuerungsverfahren zum Umschalten eines Drehmomentpfads eines Motors (20) eines Hybrid-Elektrofahrzeugs nach Anspruch 9, wobei das Steuern des Motors (20), um in die zweite Getriebestufe zu schalten, und das Regeln der Motordrehzahl auf eine Solldrehzahl der zweiten Getriebestufe Folgendes umfassen:
Erfassen einer Ist-Getriebestufe des Motors (20),
wobei die folgenden Schritte nacheinander durchgeführt werden, wenn die Ist-Getriebestufe des Motors (20) eine sechste Getriebestufe ist: Steuern des Antriebssystems (10) zur Umschaltung in eine fünfte Getriebestufe, Steuern des Motors (20) zur Umschaltung in eine vierte Getriebestufe, Steuern des Antriebssystem (10) zur Umschaltung in eine dritte Getriebestufe, Steuern des Motors (20) zur Umschaltung in die zweite Getriebestufe und Regeln der Motordrehzahl auf eine voreingestellte Drehzahl der zweiten Getriebestufe, und
die folgenden Schritte nacheinander durchgeführt werden, wenn die Ist-Getriebestufe des Motors (20) die vierte Getriebestufe ist: Steuern des Antriebssystems (10) zur Umschaltung in eine dritte Getriebestufe, Steuern des Motors (20) zur Umschaltung in die zweite Getriebestufe und Regeln der Motordrehzahl auf die voreingestellte Drehzahl der zweiten Getriebestufe.

11. Steuerungsverfahren zum Umschalten eines Drehmomentpfads eines Motors (20) eines Hybrid-Elektrofahrzeugs nach Anspruch 9, zudem Folgendes umfassend:
Erfassen einer dritten Ist-Fahrzeuggeschwindigkeit, wenn der zweite Ist-Ladezustand geringer ist als der erste voreingestellte Wert, und
Übergehen des Lade-/Entladezustands des Motors (20), sodass der Motor (20) vom Antriebssystem (10) im ISG-Pfad aufgeladen wird, wenn die dritte Ist-Fahrzeuggeschwindigkeit geringer ist als der achte voreingestellte Wert.

12. Steuerungsverfahren zum Umschalten eines Drehmomentpfads eines Motors (20) eines Hybrid-Elektrofahrzeugs nach Anspruch 11, wobei das Verfahren nach dem Übergang des Lade-/Entladezustands des Motors (20), sodass der Motor (20) vom Antriebssystem (10) im ISG-Pfad aufgeladen wird, zudem Folgendes umfasst:
Erfassen eines dritten Ist-Ladezustands, und
Übergehen des Lade-/Entladezustands des Motors (20), sodass der Motor (20) ein negatives Drehmoment am Antriebssystem (10) im ISG-Pfad erzeugt, um das Antriebssystem (10) beim Stoppen zu unterstützen, wenn der dritte Ist-Ladezustand nicht geringer ist als der erste voreingestellte Wert.

## Revendications

1. Procédé pour commuter un chemin de sortie de couple d'un moteur (20) d'un véhicule électrique hybride, comprenant :
acquérir un état de chemin initial du chemin de sortie de couple du moteur (20) ;
acquérir une vitesse initiale de véhicule du véhicule ;
acquérir une ouverture de pédale de frein ;
acquérir une ouverture initiale de la pédale d'accélérateur ;
acquérir un état de charge initial d'une batterie de véhicule ;
**caractérisé en ce que**
si l'état de chemin initial est un chemin intégré de démarreur et de générateur, ISG, l'état de charge initial est inférieur à une première valeur prédéfinie, la vitesse initiale de véhicule est inférieure à une deuxième valeur prédéfinie et l'ouverture initiale de la pédale d'accélérateur est supérieure à la troisième valeur prédéfinie, commander le chemin de sortie de couple du moteur (20) à faire passer du chemin ISG à un chemin d'entraînement électrique d'essieu avant, EFAD ; et
si l'état de chemin initial est le chemin EFAD, l'état de charge initial est inférieur à la première valeur prédéfinie, l'ouverture de la pédale de frein est supérieure à une quatrième valeur prédéfinie et la vitesse initiale de véhicule est supérieure à une cinquième valeur prédéfinie, commander le chemin de sortie de couple du moteur (20) à faire passer du chemin EFAD au chemin ISG ;
dans lequel le véhicule comprend un moteur à combustion (10), le moteur (20), un premier embrayage (Cl), un deuxième embrayage (C2) et une transmission ; et
le chemin ISG fait référence à ce que le moteur (20) est connecté au moteur à combustion (10) par l'intermédiaire du deuxième embrayage (C2), tandis que le moteur (20) est déconnecté de la transmission ; le chemin EFAD fait référence à ce que le moteur (20) est directement connecté à la transmission pour assister ou charger, et le moteur (20) est déconnecté du moteur à combustion (10) .

2. Procédé de commande pour commuter un chemin de sortie de couple d'un moteur (20) d'un véhicule électrique hybride selon la revendication 1, dans lequel commander le chemin de sortie de couple du moteur (20) à faire passer du chemin ISG au chemin EFAD comprend :
acquérir un état initial de charge/décharge du moteur (20) ;
si l'état initial de charge/décharge est que le moteur (20) est chargé par un moteur à combustion (10) dans le chemin ISG, contrôler le couple du moteur à faire passer d'un couple négatif à un couple positif, faire passer l'état de charge/décharge du moteur (20) à ce que le moteur (20) délivre un couple positif à une extrémité de vilebrequin du moteur à combustion (10) dans le chemin ISG, et acquérir le premier couple actuel du moteur à combustion (10) ;
si l'état initial de charge/décharge est que le moteur (20) délivre un couple positif à l'extrémité de vilebrequin du moteur à combustion (10) dans le chemin ISG, acquérir le premier couple actuel du moteur à combustion (10) ;
si le premier couple actuel du moteur à combustion (10) répond à une première condition prédéfinie, faire passer l'état de charge/décharge du moteur (20) à ce que le moteur (20) soit chargé par le moteur à combustion (10) dans le chemin ISG ;
acquérir une première vitesse actuelle de véhicule du véhicule ; et
si la première vitesse actuelle de véhicule est égale à la deuxième valeur prédéfinie, faire passer l'état de charge/décharge du moteur (20) à ce que le moteur (20) délivre un couple positif à une extrémité de roue (40) dans le chemin EFAD.

3. Procédé de commande pour commuter un chemin de sortie de couple d'un moteur (20) d'un véhicule électrique hybride selon la revendication 2, dans lequel commander le couple du moteur à faire passer d'un couple négatif à un couple positif, et faire passer de l'état de charge/décharge du moteur (20) à ce que le moteur (20) délivre un couple positif à l'extrémité du vilebrequin du moteur à combustion (10) dans le chemin ISG, comprend :
acquérir le premier couple actuel du moteur (20) ;
déterminer un premier paramètre de pente selon le premier couple actuel du moteur (20) et une première durée prédéfinie ; et
commander le couple du moteur à faire passer d'un couple négatif à un couple positif selon le premier paramètre de pente, et faire passer l'état de charge/décharge du moteur (20) à ce que le moteur (20) délivre un couple positif à l'extrémité du vilebrequin du moteur à combustion (10) dans le chemin ISG.

4. Procédé de commande pour commuter un chemin de sortie de couple d'un moteur (20) d'un véhicule électrique hybride selon la revendication 2, comprenant en outre :
acquérir un premier état de charge actuel de la batterie du véhicule, déterminer le couple de charge selon le premier état de charge actuel, et déterminer le couple initial demandé par un conducteur selon l'ouverture initiale de la pédale d'accélérateur ;
dans lequel la première condition prédéfinie est que le premier couple actuel du moteur à combustion (10) ne soit pas inférieur à une différence entre le couple initial demandé par le conducteur et le couple de charge.

5. Procédé de commande pour commuter un chemin de sortie de couple d'un moteur (20) d'un véhicule électrique hybride selon la revendication 2, dans lequel faire passer de l'état de charge/décharge du moteur (20) à ce que le moteur (20) délivre un couple positif à l'extrémité de roue (40) dans le chemin EFAD comprend :
réduire le couple du moteur à 0N·m, et ajuster un angle d'allumage pour augmenter le couple réel du moteur à combustion (10), de sorte que le couple réel du moteur à combustion (10) ne soit pas inférieur au couple demandé par un conducteur sur l'extrémité de roue (40) ;
commander le moteur (20) pour passer d'un mode couple à un mode vitesse de rotation ;
ajuster un régime de moteur à un régime cible de moteur dans le chemin EFAD, de sorte que l'état de charge/décharge du moteur (20) est fait passer à ce que le moteur (20) délivre un couple positif à l'extrémité de roue (40) dans le chemin EFAD.

6. Procédé de commande pour commuter un chemin de sortie de couple d'un moteur (20) d'un véhicule électrique hybride selon la revendication 5, dans lequel avant d'ajuster le régime de moteur au régime cible de moteur dans le chemin EFAD, le procédé comprend en outre :
acquérir une vitesse actuelle de roue ;
acquérir un rapport de réduction principal ;
acquérir un rapport de transmission des engrenages de transmission ;
déterminer le régime cible de moteur dans le chemin EFAD,
dans lequel le régime cible de moteur dans le chemin EFAD est égal à un produit de la vitesse actuelle de roue, du rapport de réduction principal et du rapport de transmission des engrenages de transmission.

7. Procédé de commande pour commuter un chemin de sortie de couple d'un moteur (20) d'un véhicule électrique hybride selon la revendication 2, dans lequel après faire passer de l'état de charge/décharge du moteur (20) à ce que le moteur (20) délivre un couple positif à l'extrémité de roue (40) dans le chemin EFAD, le procédé comprend en outre :
acquérir une ouverture actuelle de pédale d'accélérateur ;
déterminer le couple actuellement demandé par un conducteur selon l'ouverture actuelle de la pédale d'accélérateur ;
acquérir le deuxième couple actuel du moteur à combustion (10) ; et
si le deuxième couple actuel du moteur à combustion (10) est inférieur au couple actuellement demandé par le conducteur, faire passer de l'état de charge/décharge du moteur (20) à ce que le moteur (20) délivre un couple positif à l'extrémité du vilebrequin du moteur à combustion (10) dans le chemin EFAD.

8. Procédé de commande pour commuter un chemin de sortie de couple d'un moteur (20) d'un véhicule électrique hybride selon la revendication 7, dans lequel faire passer de l'état de charge/décharge du moteur (20) à ce que le moteur (20) délivre un couple positif à l'extrémité de vilebrequin du moteur à combustion (10) dans le chemin EFAD comprend :
acquérir le deuxième couple actuel du moteur (20) ;
acquérir le couple maximal du moteur à combustion (10) ;
déterminer une charge de moteur à combustion (10) selon le couple actuellement demandé par le conducteur et du couple maximal du moteur la combustion (10) ;
déterminer une deuxième durée prédéfinie selon une relation d'étalonnage prédéfinie et de la charge du moteur à combustion ;
déterminer un deuxième paramètre de pente selon le deuxième couple actuel du moteur (20) et de la deuxième durée prédéfinie ; et
commander le moteur (20) selon le deuxième paramètre de pente, et faire passer de l'état de charge/décharge du moteur (20) à ce que le moteur (20) délivre un couple positif à l'extrémité du vilebrequin du moteur à combustion (10) dans le chemin EFAD.

9. Procédé de commande pour commuter un chemin de sortie de couple d'un moteur (20) d'un véhicule électrique hybride selon la revendication 1, dans lequel commander le chemin de sortie de couple du moteur (20) à faire passer du chemin EFAD au chemin ISG comprend :
acquérir une deuxième vitesse actuelle de véhicule du véhicule ;
si la deuxième vitesse actuelle de véhicule est égale à une sixième valeur prédéfinie ou à une septième valeur prédéfinie, commander le moteur (20) pour passer à une deuxième vitesse, et ajuster un régime de moteur à un régime cible de la deuxième vitesse, dans lequel la sixième valeur prédéfinie est supérieure à la septième valeur prédéfinie ;
acquérir un deuxième état de charge actuel de la batterie du véhicule ; et
si le deuxième état de charge actuel n'est pas inférieur à la première valeur prédéfinie, ajuster le régime de moteur à un régime cible de moteur dans le chemin ISG, de sorte que le régime de moteur soit égal à un régime de moteur à combustion, et faire passer l'état de charge/décharge du moteur (20) à ce que le moteur (20) délivre un couple négatif au moteur à combustion (10) dans le chemin ISG pour aider le moteur à combustion (10) à s'arrêter.

10. Procédé de commande pour commuter un chemin de sortie de couple d'un moteur (20) d'un véhicule électrique hybride selon la revendication 9, dans lequel commander le moteur (20) pour passer à la deuxième vitesse et ajuster le régime de moteur au régime cible de la deuxième vitesse comprenant :
acquérir une vitesse actuelle du moteur (20) ;
si la vitesse actuelle du moteur (20) est une sixième vitesse, les étapes suivantes sont exécutées séquentiellement : commander le moteur à combustion (10) pour passer à une cinquième vitesse, commander le moteur (20) pour passer à une quatrième vitesse, commander le moteur à combustion (10) pour passer à une troisième vitesse, commander le moteur (20) pour passer à la deuxième vitesse, et ajuster le régime de moteur à un régime prédéfini de la deuxième vitesse ; et
si la vitesse actuelle du moteur (20) est la quatrième vitesse, les étapes suivantes sont exécutées séquentiellement : commander le moteur à combustion (10) pour passer à une troisième vitesse, commander le moteur (20) pour passer à la deuxième vitesse, et ajuster le régime de moteur au régime prédéfini de la deuxième vitesse.

11. Procédé de commande pour commuter un chemin de sortie de couple d'un moteur (20) d'un véhicule électrique hybride selon la revendication 9, comprenant en outre :
si le deuxième état de charge actuel est inférieur à la première valeur prédéfinie, acquérir une troisième vitesse actuelle de véhicule ; et
si la troisième vitesse actuelle de véhicule est inférieure à une huitième valeur prédéfinie, faire passer l'état de charge/décharge du moteur (20) à ce que le moteur (20) soit chargé par le moteur à combustion (10) dans le chemin ISG.

12. Procédé de commande pour commuter un chemin de sortie de couple d'un moteur (20) d'un véhicule électrique hybride selon la revendication 11, dans lequel après faire passer de l'état de charge/décharge du moteur (20) à ce que le moteur (20) soit chargé par le moteur à combustion (10) dans le chemin ISG, le procédé comprend en outre :
acquérir un troisième état de charge actuel ; et
si le troisième état de charge actuel n'est pas inférieur à la première valeur prédéfinie, faire passer l'état de charge/décharge du moteur (20) à ce que le moteur (20) délivre un couple négatif au moteur à combustion (10) dans le chemin ISG, pour aider le moteur à combustion (10) à s'arrêter.
